# EUROPÄISCHE PATENTSCHRIFT

(11) **EP 0 778 862 B1**
(45) Veröffentlichungstag und Bekanntmachung des Hinweises auf die Patenterteilung: **12.08.1998**
(21) Anmeldenummer: 95929829.0
(22) Anmeldetag: 09.08.1995
(51) Int. Cl.: C08K 5/09, C08K 5/54, C08K 3/24

(54) **ZUSAMMENSETZUNG ZUR HERSTELLUNG VON SCHNELLHÄRTENDEN AMINOSILANEVERNETZENDEN SILIKONMASSEN**
COMPOUND FOR USE IN THE PRODUCTION OF RAPIDLY HARDENING SILICONE MATERIALS WHICH CAN CROSS-LINK AMINOSILANES
COMPOSITIONS POUR LA PRODUCTION DE SILICONES A DURCISSEMENT RAPIDE, RETICULEES PAR DES AMINOSILANES

(30) Priorität: 03.09.1994 DE 4431489
(43) Veröffentlichungstag der Anmeldung: 18.06.1997
(73) Patentinhaber: Heidelberger Bauchemie GmbH, 69120 Heidelberg (DE)
(72) Erfinder: HOHENEDER, Rudolf, 83278 Traunstein (DE)
(74) Vertreter: Grussdorf, Jürgen, Dr.
(86) Internationale Anmeldenummer: EP9503162
(87) Internationale Veröffentlichungsnummer: WO9607696

(56) Entgegenhaltungen:
- EP-A- 0 208 963
- EP-A- 0 378 952
- EP-A- 0 655 475
- DE-A- 3 143 705
- DE-A- 4 242 445
- US-A- 4 592 959

## Beschreibung

Die vorliegende Erfindung betrifft einen Bausatz zur Herstellung von schnellhärtenden, aminosilanvernetzenden Silikonmassen, bestehend aus zumindest bifunktionell terminierten Diorganopolysiloxanen, Aminosilan- Vernetzungsmitteln, sowie ggf. Füllstoffen, geeigneten Additiven, Pigmenten, Farbstoffen, Oxidations-, Hitze- und Lichtschutzpigmenten sowie Lösungsmittel und Weichmacher sowie die Verwendung als Klebstoffe oder Formmassen.

Solche auch als kaltvulkanisierende, einkomponentige Silikonkautschuke bekannten Organopolysiloxan-Mischungen vernetzen üblicherweise bei Raumtemperatur unter Aufnahme von Wasser aus der umgebenden Atmosphäre zu kautschukelastischen Polymeren. Als Kettenverlängerer und Vernetzer werden zwei- und höherfunktionelle Aminosilanverbindungen eingesetzt, welche durch Reaktion mit dem Polysiloxan bzw. durch Hydrolyse Amine abspalten und so die Ausbildung eines makromolekularen Netzwerkes einleiten. Nach erfolgter Aushärtung zeichnen sich solche Massen durch eine gute Eigenhaftung auf den unterschiedlichsten Werkstoffoberflächen und durch eine allgemein hohe Beständigkeit gegenüber Temperatur-, Licht-, Feuchtigkeits- sowie Chemikalieneinwirkung aus.

Die Aushärtung solcher einkomponentigen, bei Raumtemperatur unter Feuchtigkeitsaufnahme vernetzenden Polysiloxan-Mischungen verläuft verhältnismäßig langsam, da das für die Reaktion erforderliche Wasser gasförmig aus der umgebenden Atmosphäre in das Innere der Masse diffundieren muß. Die Geschwindigkeit der Durchhärtung nimmt daher mit fortschreitender Reaktion im Inneren der Masse kontinuierlich ab. Bei geringer Luftfeuchtigkeit oder bei einem ungünstigen Verhältnis von Oberfläche zu Volumen der Silikonmasse kann die Reaktion sehr langsam werden oder wie in dampfdicht abgeschlossenen Räumen auch vollständig zum Erliegen kommen.

Die an sich vielfältigen Einsatzmöglichkeiten solcher luftfeuchtigkeitshärtenden Silikone als Dicht- oder Klebstoff sind insbesondere bei Verwendung in der industriellen Fertigung wegen der langsamen Aushärtung eingeschränkt. Zwar sind zweikomponentige, bei Raumtemperatur oder auch erst bei höherer Temperatur schnell härtende Silikonkautschuksysteme bekannt, doch scheitert deren Einsatz häufig an der mangelnden Eigenhaftung oder auch der vergleichsweise geringen Temperaturbeständigkeit dieser Produkte. Setzt man aber die unter dem Einfluß von Luftfeuchtigkeit nur langsam aushärtenden Silikone ein, werden bei den aus wirtschaftlichen Gründen erwünschten kurzen Taktzeiten große Zwischenlager für abgedichtete oder verklebte Teile notwendig, um die Aushärtung sicherzustellen. Gegebenenfalls müssen diese Zwischenlager zusätzlich klimatisiert oder befeuchtet werden. Unter Umständen werden auf diese Weise bereits sehr große Stückzahlen gefertigt, bevor erstmals eine Prüfung auf Fehlerfreiheit und Funktion der erzeugten Güter möglich ist. Großflächige Verklebungen zwischen diffusionsdichten Flächen sind in der Praxis mit luftfeuchtigkeitshärtenden Silikonen ebensowenig durchführbar wie die Herstellung von Formkörpern in abgeschlossenen Formen.

Setzt man den bekannten aminosilanhaltigen und luftfeuchtigkeitshärtenden Massen Wasser in flüssiger Form zu, wird im Vergleich zur Vernetzung mit Luftfeuchtigkeit eine gewisse Beschleunigung der Aushärtung erzielt. Allerdings führt diese Form der Vernetzung nicht zu Endprodukten mit Materialeigenschaften, wie sie bei reiner Luftfeuchtigkeitsvernetzung erhalten werden. Vielmehr resultieren Massen, welche auf Dauer wesentlich weicher bleiben, schlechte Eigenhaftung aufweisen und noch sehr lange Zeit mit dem als Vernetzungsspaltprodukt entstehenden Amin angequollen sind. Dementsprechend lange bleibt auch der gewöhnlich als äußerst unangenehm empfundene Amingeruch erhalten.

Ähnliche Ergebnisse, also nur geringfügige Härtungsbeschleunigung verbunden mit vergleichsweise schlechteren Materialeigenschaften und mit lange anhaltendem Amingeruch, werden erhalten, wenn Wasser in Form kristallwasserhaltiger Salze oder auch bewußt oberflächenbefeuchteter Stoffe zugesetzt wird.

Die der Erfindung zugrundeliegende Aufgabe bestand somit darin, Dicht- und Klebstoffmassen auf Basis von aminosilanvernetzenden Polysiloxanmischungen zur Verfügung zu stellen, wobei diese innerhalb kurzer Zeit, d.h. innerhalb weniger Minuten bis hin zu mehreren Stunden, aushärten sollen. Desweiteren soll die Aushärtung unabhängig sein von der umgebenden Luftfeuchtigkeit, d.h. sie soll auch in dampfdicht abgeschlossenen Bereichen bzw. Formen erfolgen. Die typischen Merkmale der bei Luftfeuchtigkeitsvernetzung entstehenden bisher bekannten Vulkanisate, wie zum Beispiel Eigenhaftung, mechanische Eigenschaften und Beständigkeiten, sollen dabei im wesentlichen erhalten bleibend.

Die der Erfindung zugrundeliegende Aufgabe wird durch die Merkmale des Hauptanspruches gelöst und durch die der Unteransprüche gefördert. Solche Mischungen sind dadurch gekennzeichnet, daß sie mindestens folgende Komponenten enthalten:
A) 100 Gew.-Teile eines zumindest bifunktionell terminierten Diorganopolysiloxans, wobei dieses aus einer linearen oder verzweigten Kette aus sich wiederholenden Einheiten der Formel 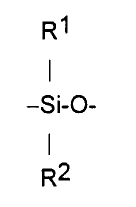 aufgebaut und - wie nachfolgend am Fall einer linearen Kette dargestellt - mit funktionellen Endgruppen Z terminiert ist. 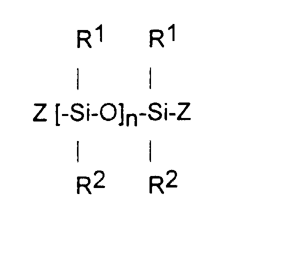 Hierbei bedeuten:
   - R¹, R²:: gesättigte oder ungesättigte Kohlenwasserstoffreste, ggf. substituiert mit Halogen- oder Cyanogruppen
   - Z:: -H, -OH, -OR¹ und ―SiR³(NR⁴R⁵)₂
   - R³:: Wasserstoff oder einwertiger gesättigter oder ungesättigter Kohlenwasserstoff- oder Kohlenwasserstoffoxyrest mit 1 - 15 Kohlenstoffatomen.
   - R⁴, R⁵:: Wasserstoff und/oder gesättigter oder ungesättigter aliphatischer, cycloaliphatischer oder aromatischer Kohlenwasserstoffrest mit 1 bis 15 Kohlenstoffatomen, ggf. substituiert mit Halogen- oder Cyanogruppen
B) 0,1 bis 20 Gew.-Teile eines Aminosilanvernetzers der allgemeinen Formel

   R³ _{y}-Si-(NR⁴R⁵)_{4-y}

   wobei y= 0 und 1 ist, und R³, R⁴ und R⁵ die obige Bedeutung haben.
C) 0,1 bis 20 Gew.-Teile einer anorganischen oder organischen, mit Aminen unter Salzbildung reagierenden Verbindung.
D) 0 bis 20 Gew.-Teile Wasser.

Als Beispiel für die Reste R¹ und R² der Komponente A sind beliebige gesättigte Alkylreste wie Methyl, Ethyl, n-Propyl, Isopropyl, Octyl, Dodecyl, Octadecyl, aber auch cyclische wie Cyclopentyl und Cyclohexyl zu nennen. Darüberhinaus können ungesättigte aliphatische und cycloaliphatische Reste wie Vinyl, Allyl, Cyclopentenyl oder Cyclohexenyl und auch aromatische wie Phenyl oder Naphthyl und aliphatisch substituierte Arylreste wie beispielsweise Benzyl oder Toluyl verwendet werden. Die Reste R¹ und R² können innerhalb eines Polysiloxans von gleichem oder auch verschiedenem Aufbau sein. Auch ist es möglich, verzweigte und unverzweigte Polysiloxane mit dem vorstehend beschriebenen Aufbau und in unterschiedlicher Kettenlänge zu mischen. Vorzugsweise werden mit Hydroxylgruppen terminierte Polysiloxane, sogenannte α, Ω-Dihydroxydiorganopolysiloxane mit Methyl- und Phenylresten eingesetzt.

Die genannten Reste können auch in halogen- und cyansubstituierter Form eingesetzt sein. Beispiele hierfür sind 1,1,1-Trifluortoluyl, β-Cyanethyl oder o-, m- oder p-Chlorphenylreste.

Die Viskosität der Diorganopolysiloxane liegt vorzugsweise im Bereich von 6000 bis 350000 mPas.

In der Komponente B können zusätzlich Verbindungen der Formel

R³ ₂-Si-(NR⁴R⁵)₂

eingesetzt werden. Diese dienen als Kettenverlängerer der verwendeten Polysiloxane.

Der Rest R³ kann neben Wasserstoff vom selben Aufbau sein, wie die Reste R¹ und R². Bevorzugt verwendet werden einfache Alkylreste wie Methyl oder Ethyl.

Die Reste R⁴ und R⁵ können den gleichen Aufbau haben wie die Reste R¹, R² oder R³, wobei einer der beiden Reste auch aus einem Wasserstoffatom bestehen kann. Bevorzugt eingesetzt werden Organoaminosilane, welche beispielsweise aus Umsetzungen von Methyltrichlorsilanen mit primären, aliphatischen oder cycloaliphatischen Aminen, insbesondere mit sek-Butylamin oder Cyclohexylamin zu erhalten sind.

Als Komponente C eignen sich Carbon- und Mineralsäuren wie beispielsweise Ameisen-, Essig-, Zitronen-, Wein-, Oxal-, Salz-, Schwefel-, Phosphorsäure und auch sauere Salze wie zum Beispiel die Hydrogenphosphate und Hydrogensulfate der Ammonium-, Alkali- und Erdalkalimetalle, ggf. auch in Kombination. Werden diese Stoffe in kristallwasserhaltiger Form eingesetzt, kann in manchen Fällen auf die Zugabe der Komponente D zu der Mischung verzichtet werden. Bevorzugt eingesetzt wird deshalb beispielsweise das Dihydrat der Oxalsäure.

Komponente D kann der Mischung sowohl in flüssiger Form als auch gebunden als Kristallwasser zum Beispiel als Natriumsulfat-Dekahydrat oder eingeschlossen in Zeolithen und auch adsorbiert auf der Oberfläche von Füllstoffen wie beispielsweise Calciumcarbonat zugegeben werden. Vorzugsweise erfolgt die Zugabe von Komponente D in Kombination mit Komponente C gebunden als Kristallwasser im Dihydrat der Oxalsäure.

Den Mischungen der Komponenten A bis D können weitere Stoffe zur Erzielung spezieller Eigenschaften zugegeben werden. Zu nennen sind hier insbesondere Farbpigmente und lösliche Farbstoffe, Stabilisatoren gegen Oxidation und Hitzeeinwirkung, Dispergatoren, Reaktionskatalysatoren, Fungizide, Haftvermittler, Lösungsmittel, Flammschutzmittel, Weichmacher (vorzugsweise Silikonöle aber auch auf Kohlenwasserstoffbasis), verstärkende Füllstoffe wie beispielsweise hochdisperse oder gefällte Kieselsäuren, Graphit, Ruß sowie passive Füllstoffe wie z.B. Calciumcarbonat, Silikate, Quarzmehl, Glas- und Carbonfasern, Diatomeenerde, Metallpulver, Metalloxide, Kunststoffpulver sowie Hohlkugeln aus Glas oder Kunststoffen.

Mischungen aus den Komponenten A bis D sind nicht lagerstabil. Die zur Reaktionsbeschleunigung notwendigen Komponenten C und D werden deshalb der Mischung aus den Komponenten A und B unmittelbar vor Gebrauch in einer geeigneten Form, vorzugsweise angepastet in Silikonölen oder -polymeren zugemischt.

Erfolgt die Aushärtung der Mischungen aus den Komponenten A bis D bei erhöhter Temperatur, so wird dadurch eine zusätzliche Beschleunigung der Vernetzungsreaktion erreicht.

Die vorliegende Erfindung betrifft auch Verfahren zur Herstellung einer Dicht-, oder Klebstoffmischung bzw. Formmasse auf Basis von zumindest bifunktionell terminierten Diorganopolysiloxanen und Aminosilan-Vernetzern, die dadurch gekennzeichnet sind, daß
A) 100 Gew.-Teile eines solchen Diorganopolysiloxans, wobei dieses aus einer linearen oder verzweigten Kette aus sich wiederholenden Einheiten der Formel 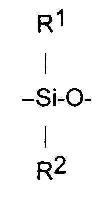 aufgebaut und entsprechend der nachfolgenden auf den Sonderfall linearer Ketten zutreffenden Formel 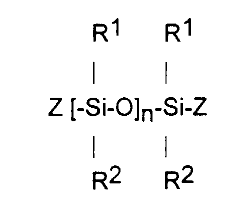 mit funktionellen Endgruppen Z terminiert ist,
   und wobei
   - R¹, R²:: gesättigte oder ungesättigte Kohlenwasserstoffreste, ggf. substituiert mit Halogen- oder Cyanogruppen
   - Z:: -H, -OH, -OR¹ und ―SiR³(NR⁴R⁵)₂
   - R³:: Wasserstoff oder einwertiger gesättigter oder ungesättigter Kohlenwasserstoff- oder Kohlenwasserstoffoxyrest
   - R⁴, R⁵:: Wasserstoff und/oder gesättigter oder ungesättigter aliphatischer, cycloaliphatischer oder aromatischer Kohlenwasserstoffrest mit 1 bis 15 Kohlenstoffatomen, ggf. substituiert mit Halogen- oder Cyanogruppen
   bedeutet, mit
B) 0,1 bis 20 Gew.-Teile eines Aminosilanvernetzers der allgemeinen Formel

   R³ _{y}-Si-(NR⁴R⁵)_{4-y}

   wobei y= 0 und 1 ist, und R³, R⁴ und R⁵ die obige Bedeutung haben.
   sowie ggf. Farbpigmenten oder löslichen Farbstoffen, Stabilisatoren gegen Oxidation und Hitzeeinwirkung, Dispergatoren, Reaktionskatalysatoren, Fungiziden, Haftvermittlern, Lösungsmitteln, Flammschutzmitteln, Weichmachern (vorzugsweise Silikonöle aber auch Weichmacher auf Kohlenwasserstoffbasis), darüberhinaus aktiven, verstärkenden Füllstoffen wie beispielsweise hochdisperse oder gefällte Kieselsäuren, Graphit, Ruß sowie passiven Füllstoffen wie z.B. Calciumcarbonat, Silikate, Quarzmehl, Glas- und Carbonfasern, Diatomeenerde, Metallpulver, Metalloxide, Kunststoffpulver sowie Hohlkugeln aus Glas oder Kunststoffen miteinander vermischt werden und unmittelbar vor der Anwendung
C) 0,1 bis 20 Gew.-Teile einer anorganischen oder organischen, mit Aminen unter Salzbildung reagierenden Verbindung und
D) 0 bis 20 Gew.-Teile Wasser

### zugegeben werden.

Die erfindungsgemäßen Mischungen haften von sich aus auf Untergründen aus Glas, Keramik, Holz, Beton, Putz, Metallen und Kunststoffen. Sie werden deshalb vorteilhafterweise verwendet als Kleb- oder Dichtstoffe, eignen sich aber auch als Schutzüberzüge zur elektrischen Isolierung, als Vergußmassen für elektrische und elektronische Bauteile, aber auch als Formmassen zur Herstellung von Abdrücken oder anderer Formteile, welche sinnvoll aus Elastomeren gefertigt werden.
Nachfolgend wird die Erfindung anhand von Beispielen näher erläutert.

### Beispiel 1

100 Gew.-Teile einer Komponente 1 bestehend aus
100 Gew.-Teilen eines α,Ω-Dihydroxydimethylpolysiloxans mit einer Viskosität von 20.000 mPa·s,
8 Gew.-Teile eines α,Ω-Bis-(trimethylsilyl)dimethylpoly-siloxans mit einer Viskosität von 100 mPa·s,
13 Gew.-Teilen einer hochdispersen Kieselsäure mit einer spezifischen Oberfläche nach BET von ca. 110 m²/g,
51 Gew.-Teilen eines Calciumcarbonat-Füllstoffes,
9 Gew.-Teilen Tris-(cyclohexylamino)methylsilan
werden bei Raumtemperatur mit 20 Gew.-Teilen einer Komponente II, bestehend aus
80 Gew.-Teilen eines α,Ω-Bis(trimethylsilyl)dimethylpoly-siloxans mit einer Viskosität von 1000 mPa·s,
9 Gew.-Teilen einer hochdispersen Kieselsäure mit einer spezifischen Oberfläche nach BET von ca. 110 m²/g,
10 Gew.-Teilen eines Oxalsäuredihydrats mit einer Kornfeinheit von < 10 µm
homogen miteinander vermischt.

Die aus den Komponenten erhaltene Mischung erreicht unter Ausschluß von Luftfeuchtigkeit bei Raumtemperatur innerhalb von 60 Minuten eine Shore-A-Härte von 22°, während beide Komponenten für sich allein unter diesen Bedingungen lagerstabile Pasten bleiben.

Ersetzt man in der oben beschriebenen Komponente II das Oxalsäuredihydrat durch 20%-ige wässrige Lösungen von Schwefel-, Salz- oder Phosphorsäure, dann erfolgt die Durchhärtung nach Vermischung mit der Komponente 1 bereits innerhalb weniger Minuten.

### Beispiel 2

Je 100 Gew.-Teile einer Mischung, bestehend aus
100 Gew.-Teilen eines α,Ω-Dihydroxydimethylpolysiloxans mit einer Viskosität von 80.000 mPa·s
41 Gew.-Teilen eines α,Ω-Bis(trimethylsilyl)dimethylpoly-siloxans mit einer Viskosität von 100 mPa·s,
6 Gew.-Teilen einer hochdispersen Kieselsäure mit einer spezifischen Oberfläche nach BET von ca. 150 m²/g,
123 Gew.-Teilen eines Calciumcarbonat-Füllstoffes,
12 Gew.-Teilen Tris-(cyclohexylamino)methylsilan
werden zum Vergleich bei Raumtemperatur in einem Fall mit 2 Gew-Teilen feinkristallinem Oxalsäuredihydrat und in einem weiteren mit 0,6 Gew.-Teilen Wasser vermischt und unter Ausschluß von Luftfeuchtigkeit gelagert.

Die Mischung mit Oxalsäure weist bereits nach drei Stunden eine Shore-A-Härte von 13°Shore-A auf und zeigt nur leichten Amingeruch, während die nur Wasser enthaltende Mischung selbst nach 24 Stunden noch keine messbare Shore-A-Härte aufweist, sehr weich und klebrig ist und sehr stark nach Amin riecht.

## Patentansprüche

1. Bausatz zur Herstellung von schnellhärtenden, aminosilanvernetzenden Silikonmassen aus zumindest bifunktionell terminierten Diorganopolysiloxanen, Aminosilanvernetzer sowie ggf. Füllstoffen, geeigneten Additiven und Pigmenten, welcher folgende Komponenten enthält:
A) 100 Gew.-Teile eines zumindest bifunktionell terminierten Diorganopolysiloxans, wobei dieses Polysiloxan aus einer linearen oder verzweigten Kette aus sich wiederholenden Einheiten der Formel 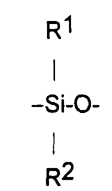 aufgebaut ist und mindestens zwei Endgruppen Z enthält.
Hierbei bedeuten
Z: -H, -OH, -OR¹ und ―SiR³(NR⁴R⁵)₂
R¹, R²: gesättigte oder ungesättigte Kohlenwasserstoffreste, ggf. substituiert mit Halogen- oder Cyanogruppen,
B) 0,1 bis 20 Gew.-Teile eines Aminosilanvernetzers der allgemeinen Formel
R³ _{y}-Si-(NR⁴R⁵)_{4-y}
wobei y= 0 und 1 ist,
mit R³: Wasserstoff oder einwertiger gesättigter oder ungesättigter Kohlenwasserstoff- oder Kohlenwasserstoffoxyrest und
R⁴, R⁵: Wasserstoff und/oder gesättigter oder ungesättigter aliphatischer, cycloaliphatischer oder aromatischer Kohlenwasserstoffrest mit 1 bis 15 Kohlenstoffatomen, ggf. substituiert mit Halogen- oder Cyanogruppen enthalten sind.
C) 0,1 bis 20 Gew.-Teile einer anorganischen oder organischen, mit Aminen unter Salzbildung reagierenden Verbindung.
D) 0 bis 20 Gew.-Teile Wasser.

2. Bausatz nach Anspruch 1, dadurch gekennzeichnet, daß die Komponente B zusätzlich Verbindungen der Formel
R³ ₂-Si-(NR⁴R⁵)₂
mit R³: Wasserstoff oder einwertiger gesättigter oder ungesättigter Kohlenwasserstoff- oder Kohlenwasserstoffoxyrest und
R⁴, R⁵: Wasserstoff und/oder gesättigter oder ungesättigter aliphatischer, cycloaliphatischer oder aromatischer Kohlenwasserstoffrest mit 1 bis 15 Kohlenstoffatomen, ggf. substituiert mit Halogen- oder Cyanogruppen
enthält.

3. Bausatz nach Anspruch 1 bis 2, dadurch gekennzeichnet, daß als Komponente C organische oder anorganische Säuren oder saure Salze enthalten sind.

4. Bausatz nach Anspruch 1 bis 3, dadurch gekennzeichnet, daß die Komponente C in kristallwasserhaltiger Form enthalten ist.

5. Bausatz nach Anspruch 1 bis 4, dadurch gekennzeichnet, daß als Komponente D Kristallwasser hydratisierter Stoffe oder an Zeolithen oder Kieselgelen oder Füllstoffoberflächen adsorbiertes Wasser verwendet wird.

6. Bausatz nach Anspruch 1 bis 5, dadurch gekennzeichnet, daß zusätzlich Farbpigmente oder lösliche Farbstoffe, Stabilisatoren gegen Oxidation und Hitzeeinwirkung, Dispergatoren, Reaktionskatalysatoren, Fungizide, Haftvermittler, Lösungsmittel, Flammschutzmittel, Weichmacher (vorzugsweise Silikonöle aber auch Weichmacher auf Kohlenwasserstoffbasis), darüberhinaus aktive, verstärkende Füllstoffe wie beispielsweise hochdisperse oder gefällte Kieselsäuren, Graphit, Ruß, sowie passive Füllstoffe wie z.B. Calciumcarbonat, Silikate, Quarzmehl, Glas- und Carbonfasern, Diatomeenerde, Metallpulver, Metalloxide, Kunststoffpulver sowie Hohlkugeln aus Glas oder Kunststoffen in einer der Komponenten A-D enthalten sind.

7. Bausatz gemäß Anspruch 1 bis 6, dadurch gekennzeichnet, daß als Diorganopolysiloxankomponente A ein α,Ω-Dihydroxydiorganopolysiloxan eingesetzt wird.

8. Verfahren zur Herstellung einer Dicht- oder Klebstoffmischung auf Basis von Diorganopolysiloxanen und Aminosilan-Vernetzern, dadurch gekennzeichnet, daß Komponenten A und B gemäß Anspruch 1 zu einer ersten Vormischung und die Komponenten C und D zu einer zweiten Vormischung vermischt werden, und die beiden Vormischungen kurz vor der Anwendung zu der wirksamen Dicht- und Klebstoffmischung vereinigt werden.

9. Verfahren nach Anspruch 8, dadurch gekennzeichnet, daß der ersten Vormischung zusätzlich Verbindungen der Formel
R³ ₂-Si-(NR⁴R⁵)₂
wobei R³, R⁴ und R⁵ die obige Bedeutung haben,
zugemischt werden.

10. Verfahren nach Anspruch 8 oder 9, dadurch gekennzeichnet, daß als Komponente C eine Verbindung gemäß Anspruch 3 oder 4 und als Komponente D eine Mischung gemäß Anspruch 4 oder 5 verwendet wird.

11. Verfahren nach Anspruch 8 bis 10, dadurch gekennzeichnet, daß die Komponenten C und/oder D ggf. in Kombination mit Stoffen aus Anspruch 6 angepastet und ggf. ein Weichmacher auf Silikonbasis oder ein Diorganopolysiloxan-Polymeres gemäß Anspruch 1 zugesetzt wird.

12. Verfahren nach Anspruch 8 bis 11, dadurch gekennzeichnet, daß man ein α,Ω-Dihydroxydiorganopolysiloxan verwendet.

13. Verwendung von Mischungen der Bausätze nach Anspruch 1 bis 7 als Dicht- oder Klebstoff.

14. Verwendung von Mischungen der Bausätze nach Anspruch 1 bis 7 als Formmasse.

## Claims

1. Kit for the production of rapidly-hardening aminosilane cross-linking silicone masses of at least bifunctionally terminated diorganopolysiloxanes, aminosilane cross-linkers, as well as possibly filling materials, suitable additives and pigments, which contains the following components:
A) 100 parts by weight of an at least bifunctionally terminated diorganopolysiloxane, whereby this polysiloxane is built up from a linear or branched chain of repeating units of the formula 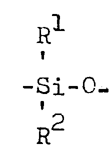 and contains at least two end groups Z. There hereby signify
Z : -H, -OH, OR¹ and -SiR³(NR⁴R⁵)₂
R¹,R² : saturated or unsaturated hydrocarbon radicals, possibly substituted with halogen or cyano groups,
B) 0.1 to 20 parts by weight of an aminosilane crosslinker of the general formula
R³ _{y} -Si-(NR⁴R⁵)_{4-y}
whereby y = 0 and 1,
with R³: hydrogen or monovalent saturated or unsaturated hydrocarbon or hydrocarbonoxy radical and
R⁴, R⁵: hydrogen and/or saturated or unsaturated aliphatic, cycloaliphatic or aromatic hydrocarbon radical with 1 to 15 carbon atoms, possibly substituted with halogen or cyano groups,
C) 0.1 to 20 parts by weight of an inorganic or organic compound reacting with amines with salt formation
D) 0 to 20 parts by weight of water.

2. Kit according to claim 1, characterised in that the component B additionally contains compounds of the formula
R³ ₂-Si-(NR⁴R⁵)₂
with R³: hydrogen or monovalent saturated or unsaturated hydrocarbon or hydrocarbonyloxy radical and
R⁴, R⁵: hydrogen and/or saturated or unsaturated aliphatic, cycloaliphatic or aromatic hydrocarbon radical with 1 to 15 carbon atoms, possibly substituted with halogen or cyano groups.

3. Kit according to claim 1 to 2, characterised in that organic or inorganic acids or acid salts are contained as component C.

4. Kit according to claim 1 to 3, characterised in that the component C is contained in a form containing water or crystallisation.

5. Kit according to claim 1 to 4, characterised in that, as component D, there is used water of crystallisation hydrated materials or water adsorbed on zeolites or silica gels or filling material surfaces.

6. it according to claim 1 to 5, characterised in that there are contained additional coloured pigments or soluble dyestuffs, stabilisers against oxidation and action of heat, dispersers, reaction catalysts, fungicides, adhesives, solvents, flame protection agents, plasticisers (preferably silicone oils but also plasticisers based on hydrocarbons), furthermore active, strengthening filling materials, such as for example highly dispersed or precipitated silicic acids, graphite, carbon black, as well as passive filling materials, such as e.g. calcium carbonate, silicates, quartz meal, glass and carbon fibres, diatomaceous earth, metal powder, metal oxides, synthetic material powder, as well as hollow spheroids of glass or synthetic materials in one of components A - D.

7. Kit according to claim 1 to 6, characterised in that an α,Ω-dihydroxydiorganopolysiloxane is used as diorganopolysiloxane component A.

8. Process for the production of a sealing or adhesive mixture based on diorganopolysiloxanes and aminosilane cross-linkers, characterised in that components A and B according to claim 1 are mixed to give a first pre-mixture and the components C and D to give a second pre-mixture and the two pre-mixtures are combined shortly before use to give the effective sealing and adhesive mixture.

9. Process according to claim 8, characterised in that to the first pre-mixture are additionally admixed compounds of the formula
R³ ₂-Si-(NR⁴R₅)₂
whereby R³, R⁴ and R⁵ have the above meaning.

10. Process according to claim 8 or 9, characterised in that, as component C, there is used a compound according to claim 3 or 4 and, as component D, a mixture according to claim 4 or 5.

11. Process according to claim 8 to 10, characterised in that the components C and/or D, possibly in combination with materials from claim 6, are pasted and possibly a plasticiser based on silicone or a diorganopolysiloxane polymer according to claim 1 added thereto.

12. Process according to claim 8 to 11, characterised in that one uses an α,Ω-dihydroxydiorganopolysiloxane.

13. Use of mixtures of the kits according to claim 1 to 7 as sealing or adhesive material.

14. Use of mixtures of the kits according to claim 1 to 7 as moulding mass.

## Revendications

1. Kit de préparation de masses silicones à durcissement rapide, induisant la réticulation des aminosilanes, composées de di-organopolysiloxanes à terminaison au moins bifonctionnelle, d'agents de réticulation de l'aminosilane ainsi que, le cas échéant, de matières de charge, d'adjuvants et de pigments appropriés, lequel kit contient les composants suivants
A)100 parties en poids d'un di-organopolysiloxane à terminaison au moins bifonctionnelle, ce polysiloxane étant constitué d'une chaîne linéaire ou ramifiée d'unités itératives de formule 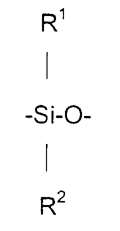 et contenant au moins deux groupes terminaux Z.
La signification donnée ici est la suivante
Z: -H, -OH, -OR¹ et ―SiR³(NR⁴R⁵)₂
R¹, R²: résidus hydrocarbures saturés ou insaturés, le cas échéant substitués par des groupes halogène ou cyano,
B)0,1 à 20 parties en poids d'un agent de réticulation de l'aminosilane répondant à la formule générale
R³y-Si-(NR⁴R⁵)_{4-y}
y étant égal à 0 et à 1,
R³ étant: un hydrogène ou un résidu ou oxyrésidu d'hydrocarbure monovalent saturé ou insaturé et
R⁴, R⁵ étant: un hydrogène et/ou un résidu d'hydrocarbure aliphatique, cycloaliphatique ou aromatique saturé ou insaturé possédant 1 à 15 atomes de carbone, le cas échéant substitué par des groupes halogène ou cyano.
C)0,1 à 20 parties en poids d'un composé inorganique ou organique réagissant avec les amines en formant des sels,
D)0 à 20 parties en poids d'eau.

2. Kit selon la revendication 1 caractérisé en ce que le composant B contient en supplément des composés de la formule
R³ ₂-Si-(NR⁴R⁵)₂
R³ étant: un hydrogène ou un résidu ou oxyrésidu d'hydrocarbure monovalent saturé ou insaturé et
R⁴, R⁵ étant: un hydrogène et/ou un résidu d'hydrocarbure aliphatique, cycloaliphatique ou aromatique saturé ou insaturé possédant 1 à 15 atomes de carbone, le cas échéant substitué par des groupes halogène ou cyano.

3. Kit selon les revendications 1 à 2 caractérisé en ce qu'il contient, à titre de composant C, des acides organiques ou inorganiques ou des sels acides.

4. Kit selon les revendications 1 à 3 caractérisé en ce que le composant C est sous une forme contenant de l'eau de cristallisation.

5. Kit selon les revendications 1 à 4 caractérisé en ce qu'on utilise comme composant D des substances hydratées à l'eau de cristallisation ou de l'eau fixée par adsorption sur des zéolithes ou des gels de silice ou des surfaces de matières de charge.

6. Kit selon les revendications 1 à 5 caractérisé en ce que l'un des composants A-D contient en supplément des pigments colorants ou des colorants solubles, des stabilisants contre l'oxydation et l'action de la chaleur, des dispersants, des catalyseurs de réaction, des fongicides, des agents adhésifs, des solvants, des agents ignifuges, des plastifiants (de préférence des huiles silicones mais également des plastifiants à base d'hydrocarbures), en outre des matières de charge actives renforçatrices comme par exemple les acides siliciques hautement dispersés ou précipités, le graphite, le noir de carbone, ainsi que les matières de charge passives comme p.ex. le carbonate de calcium, les silicates, la poudre de quartz, les fibres de verre et de carbone, les terres à diatomées, le métal pulvérisé, les oxydes métalliques, la poudre de plastique ainsi que les sphères creuses en verre ou en matières plastiques.

7. Kit selon les revendications 1 à 6 caractérisé en ce qu'on utilise un α,Ω-dihydroxy-di-organopolysiloxane comme composant A di-organopolysiloxane.

8. Méthode de production d'un mélange d'agents d'étanchéification ou d'agents adhésifs à base de di-organopolysiloxanes et d'agents de réticulation de l'aminosilane, caractérisée en ce que les composants A et B selon la revendication 1 sont mélangés pour former un premier prémélange et les composants C et D sont mélangés pour former un deuxième prémélange, et en que ces deux prémélanges sont combinés juste avant l'utilisation pour obtenir un mélange d'agents d'étanchéification ou d'agents adhésifs.

9. Méthode selon la revendication 8 caractérisée en ce qu'on ajoute au premier prémélange en supplément des composés de la formule
R³ ₂-Si-(NR⁴R⁵)₂
R³, R⁴ et R⁵ prenant la signification ci-dessus.

10. Méthode selon les revendications 8 ou 9 caractérisée en ce qu'on utilise un composé selon les revendications 3 ou 4 comme composant C et un mélange selon les revendications 4 ou 5 comme composant D.

11. Méthode selon les revendications 8 à 10 caractérisée en ce que les composants C et/ou D, éventuellement combinés à des substances selon la revendication 6, sont transformés en pâte et en ce qu'on leur ajoute le cas échéant un plastifiant à base de silicone ou un polymère di-organopolysiloxane selon la revendication 1.

12. Méthode selon les revendications 8 à 11 caractérisée en ce qu'on utilise un α,Ω-dihydroxy-di-organopolysiloxane.

13. Utilisation de mélanges des kits selon les revendications 1 à 7 comme agent d'étanchéification ou agent adhésif.

14. Utilisation de mélanges des kits selon les revendications 1 à 7 comme matière moulable.
